(19) Europäisches Patentamt
European Patent Office
Office européen des brevets

(11) **EP 4 604 077 A1**

(12) **EUROPEAN PATENT APPLICATION**

(43) Date of publication:
**20.08.2025   Bulletin 2025/34**

(21) Application number: **24157952.3**

(22) Date of filing: **15.02.2024**

(51) International Patent Classification (IPC):
**G06V 10/774** (2022.01)     **G06V 10/82** (2022.01)
**G06V 40/10** (2022.01)     **G06V 10/34** (2022.01)

(52) Cooperative Patent Classification (CPC):
**G06V 10/82; G06V 10/34; G06V 10/774;**
**G06V 40/103**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Khoreva, Anna**
 **70197 Stuttgart (DE)**
• **Pons-Moll, Gerard**
 **72074 Tübingen (DE)**
• **Kister, Nikita**
 **72074 Tübingen (DE)**
• **Sarandi, Istvan**
 **72076 Tübingen (DE)**

(54) **TECHNIQUE FOR GENERATING SYNTHETIC IMAGE DATA FOR BODY DETECTION-RELATED TASKS**

(57)     A technique for generating synthetic image data, which are usable for training, validating, and/or testing a downstream AI, in particular a downstream neural network, NN, for a body detection-related task based on sensor data is provided. A method comprises a step of receiving visual information in relation to a body, wherein the visual information comprises a two-dimensional, 2D, skeleton representation of the body, a 2D projected (in particular dense) semantic encoding of the body, and a 2D depth map of the body. The method further comprises a step of receiving a textual prompt relating to at least one of an appearance of the body and/or environmental information relative to the body. The method further comprises a step of generating synthetic image data of the body based on the received textual prompt conditioned by the received visual information. The generating is performed by a conditional image synthesis model.

Fig. 8A     Fig. 8B     Fig. 8C

Fig. 8D     Fig. 8E

**Description**

The present invention relates to techniques for generating synthetic image data, which are usable for training, validating, and/or testing a downstream artificial intelligence (AI), in particular a downstream neural network (NN), for a body detection-related task, for training a conditional image synthesis model for generating synthetic image data, which are usable for training, validating, and/or testing a downstream AI, in particular a downstream NN, for a body detection-related task based on sensor data, and for training, validating, and/or testing a downstream AI, in particular a downstream NN. for performing a body detection-related task based on sensor data. In particular, methods, computing devices, a system, a computer program product, and a computer-readable storage medium are provided.

Prior Art

For applications such as automated (in particular autonomous) driving, planning movements of (in particular autonomous) robots, operating smart household appliances, and/or controlling surveillance systems, it is of utmost importance to not only recognize the existence of a living body (e.g., a human or an animal), but also estimate the three-dimensional (3D) body pose and/or estimate movements in the near future. In the context of automated (and/or autonomous) driving this includes people, extreme situations, like dangerously maneuvering cars or near-hit situations involving pedestrians.

As means to estimate the 3D body pose from images, trained AI models can in principle be used. However, the acquisition of images with accurate 3D body pose annotations is conventionally a difficult process. Specialized capture studios are required, and the acquisition of data is slow. This severely limits the diversity of scene locations, human appearances and poses represented in such datasets. This means that currently the evaluation of 3d human pose estimators is done on datasets, that do not represent the diverse situations occurring in the rea world. Thus, the actual real-world performance and robustness of current state-of-the-art 3d human pose estimators is questionable.

Disclosure of the Invention

In the following, the solution according to the invention is described with respect to the claimed methods as well as with respect to the claimed computing devices. Features, advantages, or alternative embodiments herein can be assigned to the other claimed objects (e.g., the system, the computer program, or a computer program product), and vice versa. In other words, claims for the computing devices can be improved with features described or claimed in the context of the methods. In this case, the functional features of the method are embodied by structural units of the corresponding computing device and vice versa, respectively.

As to a first method aspect, a computer-implemented method for generating synthetic image data, which are usable for training, validating, and/or testing a downstream AI, in particular a downstream NN, for a body detection-related task based on sensor data is provided. The method comprises a step of receiving visual information in relation to a body. The visual information comprises a two-dimensional (2D) skeleton representation of the body, a 2D projected (in particular dense) semantic encoding of the body, and a 2D depth map of the body. The method further comprises a step of receiving a textual prompt relating to an appearance of the body and/or environmental information relative to the body. The method still further comprises a step of generating synthetic image data of the body based on the received textual prompt conditioned by the received visual information. The generating is performed by a conditional image synthesis model.

By the technique comprising the computer-implemented method, an improved robustness and versatility of the downstream artificial intelligence (AI, in particular the downstream NN) trained by the provided downstream (especially synthetic) training data is provided. Alternatively, or in addition, data augmentation and/or data enrichment (e.g., in view of a diversity of bodies, 3D body poses, appearances, environments and/or locations) is provided, in particular for efficiently training, validating, and/or testing the downstream AI (in particular the downstream NN), especially in the presence of limited (particularly real) data. Thereby, a generalization ability of the downstream AI (in particular the downstream NN) can be improved.

The technique can further enable training, validating and/or testing the downstream AI (in particular the downstream NN) for a domain transfer task (e.g., for transforming a synthetic into a photorealistic image).

The downstream AI (in particular the downstream NN) may be configured for object (in particular comprising the body) detection, (e.g., 3D) body pose detection, classification, and/or semantic segmentation of image data received by means of a sensor (e.g., a, in particular video, camera, a radar sensor, a LiDAR sensor, an ultrasonic sensor, a motion sensor, and/or a thermal sensor).

The downstream AI (in particular the downstream NN) may be trained, validated, and/or tested by the synthetic image data (briefly also: synthetic image), in particular taking into account the received visual information in relation to the body (or any further information in relation to the body determined based on the visual information) as ground truth.

The body may comprise a (in particular living) human body and/or a (in particular living) animal body.

The human body and/or the animal body may comprise a living creature in a traffic situation, e.g., for a downstream application of autonomous driving or a driving assistance system (collectively denoted as automated driving, with levels L1 to L5, and in particular the higher levels L3 to L5). Alternatively, or in addition, the human body and/or the animal body may comprise a living creature in a home automation environment.

The pieces of visual information of the body, namely the 2D skeleton representation, the 2D (in particular dense) semantic encoding, and the 2D depth map may be mutually consistent (and/or comprise a mutual consistency condition), in terms of being associated with the same body and/or the same (e.g., 3D) body pose. Alternatively, or in addition, the visual information in relation to the body may be determined based on input to a generative body model. The input to the generative body model may comprise a set of shape parameters and a set of pose parameters in relation to the body. The output of the generative body model may comprise a generated representation of a body, in particular comprising a representation of a 3D skeleton (e.g., comprising major joints and/or bones, e.g., comprising ankle, knee and hip joints for specifying the positions of the lower limbs) and a 3D surface (e.g., as a 3D mesh). The shape parameters may consider body proportions, height, and/or weight of the body. Alternatively, or in addition, the pose parameters may consider a 3D position (and/or articulation) of the skeleton of the body (and/or positions of the, in particular major, joints and/or bones). The pose parameters and the shape parameters may collectively be denoted as 3D body pose.

The generative body model may consider variations of the body shape depending on the (e.g., 3D) body pose.

The generative body model may comprise the Skinned Multi-Person Linear (SMPL) model, as described by M. Loper et al. in "SMPL: A skinned multi-person linear model", ACM Trans. Graphics (Proc. SIGGRAPH Asia), 34(6):248:1-248:16, October 2015, which is incorporated herein by reference.

Alternatively, or in addition, the 2D skeleton representation of the body, the 2D projected (in particular dense) semantic encoding of the body, and a 2D depth map of the body may be determined based on the generative body model. E.g., the 2D skeleton representation of the body may comprise a projection of the 3D position of the skeleton onto an image plane. Alternatively, or in addition, the 2D projected (in particular dense) semantic encoding of the body and/or the 2D depth map of the body may comprise a projection of the 3D surface (e.g., represented by the 3D mesh) of the body onto the (in particular same) image plane.

The 2D projected encoding of the body may be a semantic encoding, comprising semantic information, e.g., per pixel and/or voxel, within the image plane. E.g., a pixel may comprise sematic information (e.g., represented by one or more colors) encoding an anatomic structure, such as a limb (e.g., an arm or a leg), the head, or the torso of the body, which is to be imaged on the synthetic image data (e.g., to be generated).

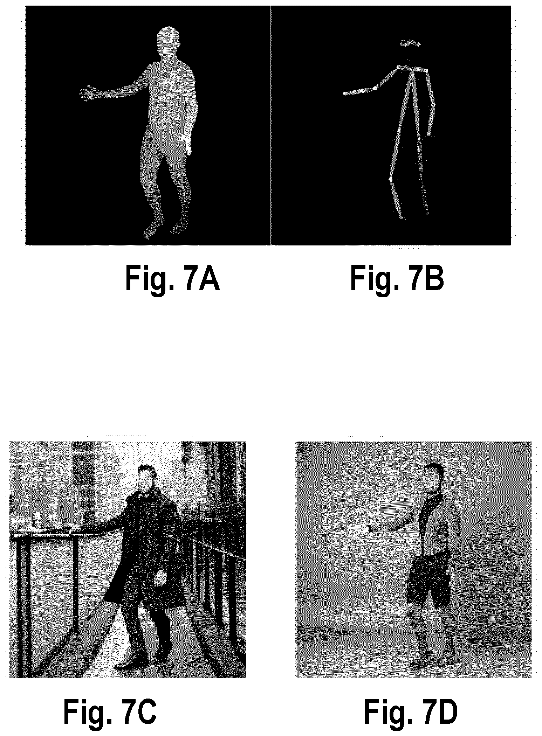

Alternatively, or in addition the encoding may be dense. A dense encoding may denote that the encoding is performed for each pixel and/or voxel independently. Alternatively, or in addition, dense (and/or dense semantic encoding) may refer to the fact that that an encoding (and/or an encoding vector) is provided for every point (and/or pixel and/or voxel) on the surface of the body. This is in contrast to a semantic encoding that only provides an encoding for some points (and/or pixels and/or voxels). An example for the conventional (in particular not dense) encoding is illustrated in Fig. 7B. The grey values (and/or shades of gray) in Fig. 7B can provide semantic information (e.g., left elbow, right elbow), e.g., only for the joints. Alternatively, the semantic encoding may only refer to limbs (e.g., as large-scale structures).

The 2D depth map may encode a (e.g., relative) depth of the information to be imaged, e.g., per pixel and/or voxel. A bright color (e.g., white, or light gray) may encode information close to the observer, and a dark color (e.g., dark gray or black) may encode information far from the observer. E.g., an anatomic structure may have gradually brighter pixels the more the location is in the foreground of the synthetic image data to be generated.

The received textual prompt (also: text prompt) may comprise data representing information in a textual format (e.g., as raw data, and/or in a, in particular natural, language). Receiving may be executed via a digital interface (e.g., a user interface, UI, in particular a graphical user interface, GUI), and/or a human machine interface (HMI). Alternatively, or in addition, the received textual prompt may be received in acoustic format to be transferred to a processable format as input for the conditional image synthesis model. Further alternatively or in addition, the textual prompt may be received from a computer-implemented textual prompt generator, which is configured for generating a diverse set of textual prompts.

The received textual prompt relating to the appearance of the body may comprise information on an outer appearance of the body; a height of the body; a weight of the body; body proportions (e.g., comprising a relationship between the size of the body's head and its torso); an age; an ethnicity (in particular in case of a human body); a species (in particular in case of an animal body), e.g., comprising a horse, cow, dog, and/or cat; a biological sex; and/or clothing worn by the (in particular human) body, e.g., comprising an overgarment, such as a coat.

The textual prompt relating to the appearance of the body may supplement the received visual information with further details on the outer appearance of the body for generating the synthetic image.

The received textual prompt relating to the environmental information relative to the body may comprise information on a location (e.g., outside, in an urban area, and/or in a rural surrounding); a lighting condition (e.g., during the day or during the night); a background scene in which the body is to be placed; and/or a weather condition (e.g., sunny, foggy, rainy, and/or snowy).

The textual prompt relating to the environmental information may be used for generating the environment of the body in (e.g., a photorealistic version of) the synthetic image data. For example, the textual prompt may be "woman on a bridge", or "man walking in a park during rainy weather", or "man on stairs wearing a coat".

In a further advancement, the received visual information and textual prompt may comprise a plurality of visual information and associated textual prompts, each for one (in particular different) body, such that a plurality of bodies will be comprise in the generated synthetic image data.

Generating, by the conditional image synthesis model, the synthetic image data of the body may relate to calculating a synthetic image by means of image processing performed by a digital computer unit. Alternatively, or in addition, generating is not necessarily based on receiving an image by an optical sensor.

The conditional image synthesis model may be or comprise a generative AI, and/or a generative model. The conditional image synthesis model may be or comprise a text-to-image model for transforming the received textual prompt into one or more features of the synthetic image data. The synthetic image may be generated with control over, e.g., 3D body pose (as encoded by the visual information), appearance and location (as an example of the environment).

The conditional image synthesis model may be denoted as upstream AI (and/or upstream model).

The conditional image synthesis model may comprise a deep learning (DL) model.

The conditioning may comprise a combination of a depth map, a (in particular dense) semantic encoding (also: semantic information) of the body, and a 2D skeleton (and/or 2D projection) of the body. Alternatively, or in addition, the content of the generated synthetic image data may be controlled by text, in particular, in the form of a textual prompt.

The downstream AI (also: downstream model), in particular the downstream NN, may receive the generated synthetic image data, and optionally the received visual information (and/or its root information comprising the 3D body pose, and/or pose parameters and shape parameters, and/or any further information in relation to the body determined based on the visual information) as input. The received visual information (and/or its root information comprising the 3D body pose, and/or pose parameters and shape parameters, and/or any further information in relation to the body determined based on the visual information) may encode a ground truth associated with the generated synthetic image data for the downstream task performed by the downstream AI, in particular the downstream NN.

The downstream task may comprise an object detection, a (e.g., 3D) body pose detection, a classification, and/or semantic segmentation of image data. The downstream task may enable a detection of obstacles relevant for safe automated (in particular autonomous) driving, planning a movement (and/or operating) a robot in an automation system and/or of a domestic appliance, and/or may enable detection of a human body and/or an animal subject to an access control.

The method may further comprise a step of determining the visual information in relation to the body, which comprises the 2D skeleton representation of the body, the 2D projected (in particular dense) semantic encoding of the body, and the 2D depth map of the body, by means of a generative body model. Determining the visual information may comprise performing projections of the generated body model onto an image plane.

The 2D skeleton representation (also: information indicative of the 2D skeletal position) may in particular comprise 2D keypoint information. A 2D keypoint may refer to the position of a (e.g., major) joint (e.g., of a subset of joints representing large scale joints (and/or motor functions), such as shoulder, hip, elbow, knee, hand, and/or foot joints) of a human or artificial body. The 2d keypoint information may comprise a 2D projection of the position of the (e.g., major) joint onto the image plane.

The 2D depth map may encode the 3D body pose in terms of a (e.g., simple) 3D surface representation, in particular a 3D mesh. The 2D depth map may comprise assigning a brightness (and/or a color) to each point of the 3D surface representation.

The 2D keypoints may be located within the volume enclosed by the (e.g., simple) 3D surface representation, in particular the 3D mesh.

The 2D projected (in particular dense) semantic encoding (also: semantic information) may assign an information regarding a body part to each point of the 2D depth map. The semantic information may comprise assigning a color (and/or a brightness) to each point of the 2D depth map. The color may, e.g., be specific to an anatomical structure, such as an arm or a leg.

By the determining of the visual information by means of the generative body model, a consistent combination of the 2D skeleton representation, the 2D projected (in particular dense) semantic encoding, and the 2D depth map of the body is guaranteed.

The generative body model may generate a model of the body based on a set of shape parameters and pose parameters. Optionally, the generative body model may comprise an SMPL model.

By the parameterization of the body in terms of the set of shape parameters and pose parameters, a large variety of (e.g., 3D) body poses and body shapes, and/or a large variety of visual information in relation to the body may be generated.

SMPL comprises a learned model of human body shape and pose-dependent shape variation and/or a skinned vertex-based model of natural human poses, as described by M. Loper et al. in "SMPL: A Skinned Multi-Person Linear Model", ACM Trans. Graphics (Proc. SIGGRAPH Asia), 34(6):248:1-248:16 (Oct. 2015), which is incorporated herein by reference. By the use of SMPL, an accurate representation of shape and pose (and/or 3D body pose) of a human body is enabled. The SMPL may comprise considering forward kinematics, linear blend skinning, and/or linear regression for obtaining 3D keypoints. A 3D keypoint may comprise a 3D (in particular coordinate, and/or voxel) position of a (e.g., major) joint.

Alternatively, or in addition, for animal bodies, a shape and pose model is provided by S. Zuffi et al. in "3D Menagerie: Modeling the 3D Shape and Pose of Animals", http://arxiv.org/abs/1611.07700, [5a], which is incorporated herein by reference. One model is learned for different species (e.g., comprising quadruped mammals).

The method may further comprise a step of providing the generated synthetic image data of the body to the downstream AI, in particular the downstream NN. The downstream AI, in particular the downstream NN, may be configured for a body detection-related task on sensor data. Providing the generated synthetic image data may comprise providing the visual information, the set of shape parameters and pose parameters of the generated body model, the generated body model based on which the visual information is determined, and/or one or more related quantities as ground truth for the body detection-related task.

By the providing of the generated synthetic image data along with the ground truth, an efficient training, validation, and/or testing of the downstream AI, in particular the downstream NN, can be enabled.

The conditional image synthesis model may comprise a generative text-to-image model, which is configured for generating the synthetic image data based on the received textual prompt, and an image-conditioning model, which is configured for encoding the received visual information for conditioning, and/or controlling (and/or modifying), the generative text-to-image model.

The generative text-to-image model can enable generating, and/or synthesizing, a (in particular photorealistic) synthetic image, which comprises the appearance and/or the environmental information of the textual prompt.

The generative text-to-image model may comprise an encoder and a (in particular skip-connected) decoder, and optionally one or more middle blocks. E.g., the generative text-to-image model may comprise a U-net architecture.

The image-conditioning model may comprise an encoder, optionally one or more middle blocks, followed by zero convolution layers. A zero-convolutional layer may comprise a (e.g., $1\times1$) convolution layer with both weight and bias initialized as zero.

The encoder of the image-conditioning model may be a (in particular trainable) copy of the encoder of the generative text-to-image model. The outputs of the optional one or more middle blocks and of the zero convolution layers may be fed (e.g., by a cross-attention mechanism) to the optional one or more middle blocks and the decoder of the generative text-to-image model.

The image-conditioning model can encode and/or transform the visual information (i.e., the received 2D skeleton representation, the 2D projected (in particular dense) semantic encoding, and the 2D depth map) in relation to the body such that it can be fed into the text-to-image model (e.g., using a cross-attention mechanism for some layers, in particular decoder layers, of the text-to-image model), thereby enabling the text-to-image model to produce (in particular photorealistic) synthetic image data consistent with the generated body model underlying the visual information. Alternatively, or in addition, conditioning the generating (in particular by the generative text-to-image model) of the synthetic image by the encoded (in particular by the image-conditioning model) visual information advantageously provides (in particular photorealistic) synthetic image data comprising a body along with ground truth data.

The image-conditioning model may be configured for performing the encoding of the received visual information in combination with (and/or based on) the textual prompt relating to the appearance of the body and/or the environmental information relative to the body.

The generative text-to-image model may "start from zero", e.g., start from pure noise as image input (also denoted as: corrupted image). Additionally, the generative text-to-image model may receive the textual prompt relating to the appearance of the body and/or environmental information relative to the body. The image-conditioning model may receive the visual information comprising the 2D skeleton representation, the 2D projected (in particular dense) semantic encoding and the 2D depth map of the body, e.g., concatenated along a channel dimension. Additionally, the image-conditioning model may receive the (in particular same as received by the generative text-to-image model) image input (e.g., the corrupted image and/or pure noise) and/or textual prompt relating to the appearance of the body and/or environmental information relative to the body.

The output of the generative text-to-image model (in particular conditioned by the outputs of the image-conditioning model) may comprise a prediction of a noise that was added to a clean image to create the corrupted image (and/or the pure noise). The (e.g., real and/or clean) image output may be determined (e.g., computed) from the predicted noise.

By the combined conditioning on the 2D skeleton representation, the 2D projected (in particular dense) semantic encoding and the 2D depth map (all of which are comprised in the received visual information), the photorealistic accurateness, and thereby the quality of the downstream training, of the synthetic image data can be significantly improved.

The generative text-to-image model may comprise a diffusion model, particularly a stable diffusion (SD) network. The SD network may comprise a U-Net architecture with an encoder and a (in particular skip-connected) decoder.

The diffusion model (also: diffusion probabilistic model, and/or score-based generative model) may comprise a machine learning (ML) model and/or a generative model, which is configured for image generation, image denoising, inpainting, and/or super-resolution by means of a diffusion process, in particular by using a forward process (e.g., adding, in particular Gaussian, noise to an image), the reverse process (e.g., predicting a, in particular Gaussian, noise within the image and compensating and/or subtracting accordingly), and a sampling procedure.

A diffusion model may be understood to cast an image generation process as a denoising task. Pure noise may be iteratively transformed into a real image. For this denoising task a model, in particular a U-Net, may be trained. It is possible to work directly in image space and generate the real image directly from the pure noise. Alternatively, or in addition, a latent diffusion model may perform (and/or conduct) the reverse process in a lower dimensional latent space of a variational autoencoder (VAE). The pure noise may be transformed into a latent embedding of an image which has to be decoded to generate the real image. The part "latent space image may be transformed back into an image in non-latent (and/or image) space" may be performed (and/or done) by the decoder of the VAE. For image generation, the encoder of the VAE need not be used. Alternatively, or in addition, the encoder of the VAE only needs to be used during the training of the diffusion model.

SD may use or comprise a latent diffusion model. SD may relate or comprise a NN architecture (also: model) for text-to-image (in particular diffusion) generation. SD aims at learning a diffusion process that generates an (e.g., denoised) image dataset from a given probability distribution (and/or a distribution of a given latent embedding dataset). The NN architecture of SD may comprise a transformer and/or a U-Net having an encoder and a decoder with skip connections (e.g., between layers of the encoder and the decoder) and/or cross-attention mechanisms (e.g., within a layer of the encoder and/or the decoder). Alternatively, or in addition, the U-Net of SD may comprise attention layers.

The NN architecture of SD may further comprise a diffusion process, by which an (e.g., noisy and/or corrupted) input image is transformed into a latent space image. By the transformer and/or the U-Net, the latent space image may be transformed back into an image in non-latent (and/or image) space (e.g., into a denoised, and/or clean, image).

SD can advantageously produce high-quality (e.g., high-resolution and/or photorealistic) synthetic images based on textual prompts at low computational cost.

Alternatively, or in addition, another type of diffusion model may operate in image space (e.g., "Imagen" as described by the Google Research Brain Team in in "Photorealistic Text-to-Image Diffusion Models with Deep Language Understanding," arXiv:2205.11487, [13], which is incorporated herein by reference, for which model weights are not published, but an open-source reproduction exists). In general, the technique for generating synthetic image data, as described herein, may be applicable to the other types of diffusion models as well.

Alternatively, or in addition, the text-to-image model may comprise DALL•E or one of its successors (e.g., DALL•E 2), and/or any text-conditional image generation based on CLIP (e.g., as described by A. Ramesh et al. in "Hierarchical Text-Conditional Image Generation with CLIP Latents", arXiv: 2204.06125 [cs.CV], [14], which is incorporated herein by reference).

The image-conditioning model may comprise a ControlNet. The ControlNet may comprise an encoder and convolution layers with a cross-attention mechanism to the generative text-to-image model, in particular to the encoder of the SD network.

The generative model, and in particular the SD network, may be conditioned by a predetermined feature, in particular by using a Control Net. For the purpose of conditioning, it is referred to L. Zhang et al. in "Adding Conditional Control to Text-to-Image Diffusion Models" (2023), available at the Computer Vision Foundation and IEEE Xplore, which is incorporated herein by reference.

The connection between the SD network and the ControlNet can provide a particularly computationally efficient conditioning, which saves time and (e.g., graphics processing unit, GPU) memory.

The combination of the SD network and the ControlNet can provide a particularly rich variety of (in particular photorealistic) generated synthetic image data comprising a body consistent with the generated body model.

The ControlNet may be initialized with weights from the depth ControlNet of Zhang et al. [11]. The main difference is that, according to the technique for generating synthetic image data described herein, the Control Net is finetuned on the (in particular body detection-related task) data with inputs (in particular the received visual information in the relation to the body, and/or the textual prompt relating to the appearance of the body and/or environmental information relative to the body) to allow better control over appearance and background compared to the original ControlNet.

As to a second method aspect, a computer-implemented method of training a conditional image synthesis model for generating synthetic image data, which are usable for training, validating, and/or testing a downstream AI, in particular a downstream NN, for a body detection-related task based on sensor data is provided. The method comprises a step of receiving a synthetic image training dataset. The synthetic image training dataset may comprise a (in particular 2D) image data set of a body, which is annotated by means of a set of 3D body markers applied exogenously to the body at the time of acquiring the image data set; a (in particular 2D) image data set of a body, which is annotated by a human expert, wherein the annotation comprises 3D body pose information; and/or a (in particular 2D) image data set of a body, which is annotated by 2D keypoint information. The method further comprises a step of training the conditional image synthesis model based on the received synthetic image training dataset. Training the conditional image synthesis model comprises transforming the annotation of the synthetic image training dataset into at least a part of visual information in relation to a body. The visual information comprises a 2D skeleton representation of the body, a 2D projected (in particular dense) semantic encoding of the body, and a 2D depth map of the body. The, in particular 2D, image data set is considered as ground truth for the generated synthetic image data.

The training of the conditional image synthesis model may further comprise generating a 3D pose information, in particular from the annotated 2D keypoint information of the (in particular 2D) image dataset and/or as intermediary step before transforming into the annotation into the at least part of visual information in relation to the body.

The (in particular 2D) image data set may comprise a real image of the body. Alternatively, or in addition, the 2D image data set may comprise a synthetic image of the body.

The (in particular 2D) image data set may correspond to a ground truth for the training of the conditional image synthesis model.

The training may be applied to the combination of the generative text-to-image model and the image-conditioning model. The image-conditioning model (e.g., the ControlNet) may in particular be trained using a standard denoising loss function. The ControlNet may also take the text prompts as input in order to predict noise, as exemplified in Eq. (1).

By the training of the conditional image synthesis model, weights of nodes (e.g., of hidden layers of a NN, in particular the ControlNet) may be learned.

The annotation (also: label) by means of the set of 3D body markers, and/or by the human expert may comprise a (in particular accurate) 3D body pose.

The generated 3D pose information from the annotated 2D keypoint information may be denoted as pseudo-3D label.

The training of the conditional image synthesis model may be monitored by means of a quality control metric. The quality control metric may comprise a 3D (e.g., human) pose metric, in particular a mean per joint position error (mpjpe), procrustes aligned mean per joint position error (pa-mpjpe), and/or a percentage of correct keypoints (pck). For an of the 3D (e.g., human) pose metrics, a distance threshold may be selected.

Alternatively, or in addition, the quality control metric may comprise a Frechet inception distance (FID), and/or an image similarity metric, in particular learned perceptual image patch similarity (LPIPS).

As to a third method aspect, a computer-implemented method of training, validating, and/or testing a downstream AI, in particular a downstream NN for performing a body detection-related task based on sensor data is provided. The method comprises a step of receiving synthetic image data of a body. The synthetic image data of the body may be generated according to the first method aspect. The synthetic image data of the body comprises a generated body model, visual information in relation to a body, and/or a related quantity. The visual information may comprise a 2D skeleton representation of the body, a 2D projected (in particular dense) semantic encoding of the body, and a 2D depth map of the body. Alternatively, or in addition, the related quantity may comprise information on the body derived from the generated body model and/or from the visual information. The method further comprises a step of training the downstream AI, in particular the downstream NN, based on the received synthetic image data of the body. Any one of the generated body model, the visual information in relation to the body, and/or the related quantity may be considered as ground truth.

The synthetic data set data provided by the technique can used for training, benchmarking, validating, and/or testing the downstream AI (in particular the downstream NN). In particular, using the synthetic image data set can enable identifying systematic errors and/or biases of the downstream AI (in particular the downstream NN).

By the training, validating, and/or testing of the downstream AI, in particular the downstream NN, using synthetic image date of the body along with ground truth based on the visual information, its underlying generated body model, and/or information derived therefrom, the downstream AI, in particular the downstream NN, can be improved in terms of performing the body detection-related task for a wide variety of bodies and environments. Alternatively, or in addition, a speed and/or convergence of training the downstream AI (in particular downstream NN) can be improved.

Performing the body detection-related task may be based on received sensor data. The task may comprise a classification, a semantic segmentation, and/or a detection of an object, in particular a detection of a body.

The detection of the body may comprise in particular detecting a road user, e.g., a pedestrian and/or a (in particular wild) animal such as a boar or deer.

The sensor data may be received from a (e.g., video) camera, a radar sensor, a LiDAR sensor, an ultrasonic sensor, a motion sensor, and/or a thermal image sensor. The sensor data may alternatively or in addition comprise a sensed belt position of a driver of a vehicle.

The method according to the third method aspect may be used for applying the downstream AI, in particular the downstream NN to automated (in particular autonomous) driving, planning a movement of a robot, operating a domestic appliance, and/or controlling an access control system.

The application may comprise (e.g., receiving sensor data from) video surveillance and/or motion capture.

Alternatively, or in addition, the application may comprise assisted driving, autonomous driving, smart home (and/or domestic) appliances, a (e.g., robotic) personal assistant, and/or operating a technical device (e.g., a robot, a power tool, and/or a manufacturing machine) in a manufacturing environment. Further alternatively or in addition, the application may comprise a security system, e.g., for theft prevention, access control, and/or surveillance of a driver of a vehicle.

The downstream AI (in particular the downstream NN) may comprise, in an inference phase, receiving as input the sensor data and providing a task-specific output, in particular comprising a determined classification and/or 3D body pose.

As to a first device aspect, a computing device for generating synthetic image data, which are usable for training, validating, and/or testing a downstream AI, in particular a downstream NN, for a body detection-related task based on sensor data is provided. The computing device may be configured to perform any one of the steps, and/or comprise any one of the features, disclosed in the context of the first method aspect.

As to as second device aspect, a computing device for training a conditional image synthesis model for generating synthetic image data, which are usable for training, validating, and/or testing a downstream AI, in particular a downstream NN, for a body detection-related task based on sensor data is provided. The computing device may be configured to perform any one of the steps, and/or comprise any one of the features, disclosed in the context of the second method aspect.

As to a third device aspect, a computing device for training, validating, and/or testing a downstream AI, in particular a downstream NN. for performing a body detection-related task based on sensor data is provided. The computing device may be configured to perform any one of the steps, and/or comprise any one of the features, disclosed in the context of the third method aspect.

As to a system aspect, a system for training, validating, testing, and/or applying a downstream AI (in particular a downstream NN) is provided. The system comprises a computing device according to the first device aspect, which is configured for generating synthetic image data, a computing device according to the second device aspect, which is configured for training the conditional image synthesis model using the generated synthetic image data, and a computing device according to the third device aspect, which is configured for the for the training, validating, and/or testing of the downstream AI (in particular a downstream NN). The system further comprises the downstream AI (in particular the downstream NN), which is configured for performing a body-related detection task, and at least one sensor and/or image capture device, which is configured for providing the sensor data, on which the body-related detection task is performed.

As to a further aspect, a computer program product is provided. The computer program product comprises program elements which induce a computing device to carry out the steps of the method according to the first, second, and/or third method aspect, when the program elements are loaded into a memory of the computing device.

As to a still further aspect, a computer-readable medium is provided, on which program elements are stored that can be read and executed by a computing device, in order to perform steps of the method according to the first, second, and/or third method aspect, when the program elements are executed by the computing device.

Brief description of the Drawings

Fig. 1 is a flow chart of a method for generating synthetic image data, which are usable for training, validating, and/or testing a downstream AI, in particular a downstream NN, for a body detection-related task based on sensor data.

Fig. 2 is a flow chart of a method for training a conditional image synthesis model for generating synthetic image data, which are usable for training, validating, and/or testing a downstream AI, in particular a downstream NN, for a body detection-related task based on sensor data.

Fig. 3 is a flow chart of a method for training, validating, and/or testing a downstream AI, in particular a downstream NN. for performing a body detection-related task based on sensor data.

Fig. 4 is an overview of the structure and architecture of a computing device for generating synthetic image data, which are usable for training, validating, and/or testing a downstream AI, in particular a downstream NN, for a body detection-related task based on sensor data.

Fig. 5 is an overview of the structure and architecture of a computing device for training a conditional image synthesis model for generating synthetic image data, which are usable for training, validating, and/or testing a downstream AI, in particular a downstream NN, for a body detection-related task based on sensor data.

Fig. 6 is an overview of the structure and architecture of a computing device for training, validating, and/or testing a

downstream AI, in particular a downstream NN. for performing a body detection-related task based on sensor data.

Figs. 7A to 7D show a conventional conditioning by a 2D depth map and 2D skeleton representation only, leading to the generation of synthetic images inconsistent with the conditioning, and/or with the textual prompt "male in city wearing a coat".

Figs. 8A to 8E show a first example of a 2D skeleton representation, a 2D (in particular dense) semantic encoding and a 2D depth map as conditions in combination with the textual prompt "a man on stairs wearing a coat", which leads to consistent and photorealistic synthetic imaging data.

Figs. 9A to 9E show a second example of a 2D skeleton representation, a 2D (in particular dense) semantic encoding and a 2D depth map as conditions in combination with the textual prompt "a man in a city wearing a coat", which leads to consistent and photorealistic synthetic imaging data.

Fig. 10 shows an exemplary architecture of a conditional image synthesis model, which makes use of a combination of Stable Diffusion and ControlNet.

Figs. 11A to 11C schematically illustrates examples of downstream applications.

Detailed Description

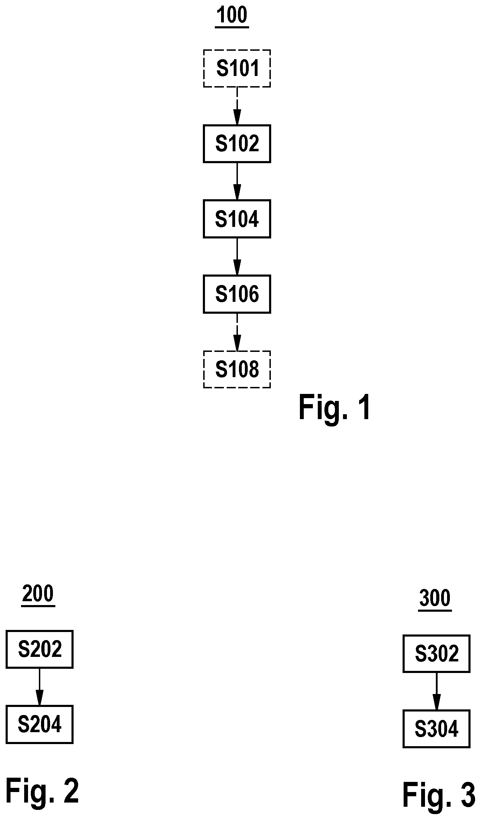

Fig. 1 schematically illustrates a flowchart of a computer-implemented method 100 for generating synthetic image data, which are usable for training, validating, and/or testing a downstream AI, particularly a downstream NN, for a body detection-related task based on sensor data.

The method 100 comprises a step S102 of receiving visual information in relation to a body. The visual information comprises a two-dimensional (2D) skeleton representation of the body, a 2D projected (in particular dense) semantic encoding of the body, and a 2D depth map of the body. The method 100 further comprises a step S104 of receiving a textual prompt relating to an appearance of the body and/or environmental information relative to the body. The method 100 still further comprises a step S106 of generating synthetic image data of the body based on the received S104 textual prompt conditioned by the received S102 visual information. The generating S106 is performed by a conditional image synthesis model.

Optionally, the method 100 comprises a step S101 of determining the visual information in relation to the body, which comprises the 2D skeleton representation of the body, the 2D projected (in particular dense) semantic encoding of the body, and the 2D depth map of the body, by means of a generative body model. Determining S101 the visual information may comprise performing projections of the generated body model onto an image plane.

Further optionally, the method 100 comprises a step S108 of providing the generated S106 synthetic image data of the body to the downstream AI, in particular the downstream NN. The downstream AI, in particular the downstream NN, may be configured for a body detection-related task on sensor data. Providing S108 the generated S106 synthetic image data may comprise providing the visual information, the set of shape parameters and pose parameters of the generated body model, the generated body model based on which the visual information is determined, and/or one or more related quantities as ground truth for the body detection-related task.

Fig. 2 schematically illustrates a flowchart of a computer-implemented method 200 of training a conditional image synthesis model for generating synthetic image data, which are usable for training, validating, and/or testing a downstream AI, in particular a downstream NN, for a body detection-related task based on sensor data.

The method 200 comprises a step S202 of receiving a synthetic image training dataset. The synthetic image training dataset may comprise a (in particular 2D) image data set of a body, which is annotated by means of a set of 3D body markers applied exogenously to the body at the time of acquiring the image data set. Alternatively, or in addition, the synthetic image training dataset may comprise a (in particular 2D) image data set of a body, which is annotated by a human expert, wherein the annotation comprises 3D body pose information. Further alternatively or in addition, the synthetic image training dataset may comprise a (in particular 2D) image data set of a body, which is annotated by 2D keypoint information. The case of the (in particular 2D) image data set of the body, the training of the conditional image synthesis model comprises generating a 3D pose information.

The method 200 further comprises a step S204 of training a conditional image synthesis model based on the received S202 synthetic image training dataset. Training S204 the conditional image synthesis model comprises transforming the annotation of the synthetic image training dataset into at least a part of visual information in relation to a body. The visual information comprises a 2D skeleton representation of the body, a 2D projected (in particular dense) semantic encoding of the body, and a 2D depth map of the body. The (in particular 2D) image data set is considered as ground truth for the generated synthetic image data.

Fig. 3 schematically illustrates a flowchart of a computer-implemented method 300 of training, validating, and/or testing a downstream AI, in particular a downstream NN. for performing a body detection-related task based on sensor data.

The method 300 comprises a step S302 of receiving synthetic image data of a body. The synthetic image data of the body are generated according to the method 100. The synthetic image data of the body comprises a generated body model, visual information in relation to a body, and/or a related quantity. The visual information comprises a 2D skeleton representation of the body, a 2D projected (in particular dense) semantic encoding of the body, and a 2D depth map of the body. Alternatively, or in addition, the related quantity comprises information on the body derived from the generated body model and/or from the visual information. The method 300 further comprises a step S304 of training the downstream AI, in particular the downstream NN, based on the received S302 synthetic image data of the body. The generated body model, the visual information in relation to a body, and/or the related quantity is considered as ground truth.

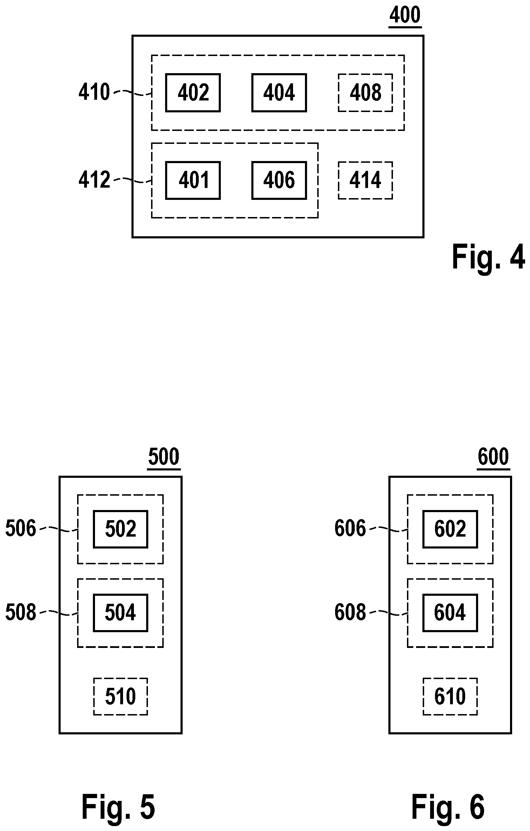

Fig. 4 schematically illustrates an architecture of a computing device 400 for generating synthetic image data, which are usable for training, validating, and/or testing a downstream AI, in particular a downstream NN, for a body detection-related task based on sensor data.

The computing device 400 comprises a first input interface 402 configured for receiving visual information in relation to a body. The visual information comprises a 2D skeleton representation of the body, a 2D projected (in particular dense) semantic encoding of the body, and a 2D depth map of the body. The computing device 400 further comprises a second input interface 404 configured for receiving a textual prompt relating to at least one of an appearance of the body and/or environmental information relative to the body. The computing device 400 still further comprises a generating module 406 comprising a conditional image synthesis model. The conditional image synthesis model is configured for generating synthetic image data of the body based on the received textual prompt conditioned by the received visual information.

Optionally, the computing device 400 comprises a determining module 401 configured for determining the visual information in relation to the body, which comprises the 2D skeleton representation of the body, the 2D projected (in particular dense) semantic encoding of the body, and the 2D depth map of the body, by means of a generative body model. Determining the visual information may comprise performing projections of the generated body model onto an image plane.

Further optionally, the computing device 400 comprises an output interface 408 configured for providing the generated synthetic image data of the body to the downstream AI, in particular the downstream NN. The downstream AI, in particular the downstream NN, may be configured for a body detection-related task on sensor data. Providing the generated synthetic image data may comprise providing the visual information, the set of shape parameters and pose parameters of the generated body model, the generated body model based on which the visual information is determined, and/or one or more related quantities as ground truth for the body detection-related task.

Any one of the first input interface 402, the second input interface 404, and the optional output interface 408 may be embodied by an input-output interface 410. Alternatively, or in addition, the generating module 406 and/or the optional determining module 401 may be embodied by a processing unit. Further alternatively or in addition, the computing device 400 may comprise at least one memory 414.

Fig. 5 schematically illustrates an architecture of a computing device 500 for training a conditional image synthesis model for generating synthetic image data, which are usable for training, validating, and/or testing a downstream AI, in particular a downstream NN, for a body detection-related task based on sensor data.

The computing device 500 comprises an input interface 502 configured receiving a synthetic image training dataset. The synthetic image training dataset may comprise a (in particular 2D) image data set of a body, which is annotated by means of a set of 3D body markers applied exogenously to the body at the time of acquiring the image data set. Alternatively, or in addition, the synthetic image training dataset may comprise a (in particular 2D) image data set of a body, which is annotated by a human expert, wherein the annotation comprises 3D body pose information. Further alternatively or in addition, the synthetic image training dataset may comprise a (in particular 2D) image data set of a body, which is annotated by 2D keypoint information. In particular in case of the (in particular 2D) image data set of the body, the training of the conditional image synthesis model comprises generating a 3D pose information, e.g., by a 3D pose information generating module (not shown in Fig. 5). The computing device 500 further comprises a training module 504 configured for training a conditional image synthesis model based on the received synthetic image training dataset. Training the conditional image synthesis model comprises transforming the annotation of the synthetic image training dataset into at least a part of visual information in relation to a body. The visual information comprises a 2D skeleton representation of the body, a 2D projected (in particular dense) semantic encoding of the body, and a 2D depth map of the body, and the (in particular 2D) image data set is taken into account as ground truth for the generated synthetic image data.

The input interface 502 may be embodied by an input-output interface 506. Alternatively, or in addition, the training module 504 may be embodied by a processing unit 508. Further alternatively or in addition, the computing device 500 may comprise at least one memory 510.

Fig. 6 schematically illustrates an architecture of a computing device 600 for training, validating, and/or testing a

downstream AI, in particular a downstream NN, for performing a body detection-related task based on sensor data.

The computing device 600 comprises an input interface 602 configured for receiving synthetic image data of a body. The synthetic image data of the body are generated according to the method 100. The synthetic image data of the body comprises a generated body model, visual information in relation to a body, and/or a related quantity. The visual information comprises a 2D skeleton representation of the body, a 2D projected (in particular dense) semantic encoding of the body, and a 2D depth map of the body. Alternatively, or in addition, the related quantity comprises information on the body derived from the generated body model and/or from the visual information. The computing device 600 further comprises a training module 604 configured for training the downstream AI, in particular the downstream NN, based on the received synthetic image data of the body. The generated body model, the visual information in relation to a body, and/or the related quantity is considered as ground truth.

The input interface 602 may be embodied by an input-output interface 606. Alternatively, or in addition, the training module 604 may be embodied by a processing unit 608. Further alternatively or in addition, the computing device 600 may comprise at least one memory 610.

Any one of the processing units 412; 508; 608 may be embodied by a central processing unit (CPU) and/or a graphics processing unit (GPU).

By the techniques presented herein, synthetic image data can be generated to benchmark and improve the task of, e.g., 3D human pose estimation from single RGB images. The methods may be deep learning based, conventionally requiring a large amount of annotated data to be effective. However, the acquisition of (in particular real) image data with accurate 3D body pose annotations is a difficult process.

With the techniques presented herein, image data of (in particular living) people (and/or animals) with control over their 3D body pose and their appearance and location can be generated. A generative model (in particular comprising the conditional image synthesis model) can be used to create (in particular synthetic image) data for the fine-grained evaluation of 3D (e.g., human) pose estimators, in particular to benchmark their robustness and generalization ability to different conditions and to identify their systematic errors and biases. Alternatively, or in addition, the generative model (in particular the conditional image synthesis model) can be used to also generate training data for 3D human pose estimators.

The techniques presented herein enable text-based image generation of people (and/or animals) with control over their 3D body pose. In particular, text control and 3D body pose control can be disentangled.

Previous text-to-image synthesis methods, such as Control Net [11], which is incorporated herein by reference, are only able to control the 2D pose while keeping the fine-grained text control. While control over the 3D (e.g., human) pose is possible with ControlNet utilizing the depth conditioned generation, its ability to control the image content through text is conventionally severely limited as is exemplarily illustrated in Figs. 7A, 7B, 7C and 7D.

Figs. 7A, 7B, 7C and 7D exemplarily illustrate drawbacks of the conventional Control Net [11] (in particular using at most a duad of visual information, such as 2D human pose condition and 2D depth map) compared to the technique for generating synthetic image data using visual information comprising the triple of the 2D skeleton representation, the 2D projected (in particular dense) semantic encoding and the 2D depth map as well as the textual prompt (which may in particular be received by both the text-to-image model and the image-conditioning model). Figs. 7A and 7B show the depth-condition and 2D human pose condition, respectively, based on which the synthetic images in Fig. 7C and 7D are generated. The depth image of Fig. 7A represents the 3D body pose, while the keypoints (e.g., comprising a small number of main joints, such as shoulders, elbows, wrists, hips, knees, and ankle) in Fig. 7B represent its 2D projection. The textual prompt for the examples of Fig. 7C and 7D is "Male in city wearing a coat".

The image of Fig. 7C may be generated, e.g., by making use of the same conditional image synthesis model as employed in the technique for generating synthetic image data using the triple of visual information as well as the textual prompt, but with the 2D (in particular dense) semantic encoding missing (and/or the textual prompt not used in the image-conditioning model). The illustrative example of Fig. 7D may in particular be obtained using a conventional Control Net-depth. It is noted that the pose of the person does not match the 3D condition. E.g., the person's left arm in Fig. 7C is close to the body, but should point more forward, and the person's right hand clasps the railing, whereas it should be opened and positioned with the thumb up according to the depth image of Fig. 7A. Additionally, the depth condition generation fails at generating the coat in the example of Fig. 7D as specified in the textual prompt. The conditional image synthesis model employed in the technique for generating synthetic image data as described herein follows the text prompt better than the conventional Control Net-depth. Fig. 7D in particular shows neither a coat nor a city.

An alternative is provided by computer graphics-based methods [1], which is incorporated herein by reference. However, the pipelines are hard to setup, and the assets have to be manually designed and created by people which limits their overall diversity. By contrast, the technique presented herein are easy to use and have the ability to generate a diverse set of synthetic image data aligned with their 3D pose ground truth, in particular without the need of human labor.

Image diffusion models learn to progressively denoise images to generate samples. The denoising can happen in pixel space or a "latent" space encoded from training data. Stable Diffusion (SD) uses latent images as the training domain. In this context, the terminology "image"," pixel," and "denoising" all refers to corresponding concepts in the "perceptual latent space" [8], which is incorporated herein by reference. Given an image $z_0$, diffusion algorithms progressively add noise to the image and produces a noisy image $z_t$, with t being how many times the noise is added. When t is large enough, the image approximates pure noise. Given a set of conditions including time step t, textual prompts $c_t$ (in particular relating to the appearance of the body and/or environmental information), as well as a task-specific conditions $c_f$ (in particular comprising the visual information, which includes the 2D skeleton representation, the 2D projected, in particular dense, semantic encoding, and the 2D depth map of the body), image diffusion algorithms learn a network $\varepsilon_\theta$ to predict the noise added to the noisy image $z_t$ with

$$L = \mathrm{E}_{z0,,t,ct,cf,\epsilon N(0,1)} \left[ \left\| \epsilon - \epsilon_\theta \left( z_t, t, c_t, c_f \right) \right\|_2^2 \right], \quad (1)$$

where L is the overall learning objective of the entire diffusion model. This learning objective can be directly used in fine tuning diffusion models.

Embodiments of the technique build upon ControlNet [11] and introduce a 3D pose control to SD. The 3D mesh of an exemplary human body is encoded using the SMPL model [5]. SMPL is a generative model that factors human bodies into shape (e.g., how individuals vary in height, weight, and/or body proportions) and pose (e.g., how the 3D surface deforms with articulation). The shape $\beta \in R^{10}$ is parameterized by the first 10 coefficients of a PCA shape space. The pose $\theta \in R^{3K}$ is modeled by relative 3D rotation of $K = 23$ joints in axis-angle representation. SMPL is a differentiable function that outputs a triangulated mesh $M(\theta,\beta) \in R^{3N}$ with $N = 6980$ vertices, which is obtained by shaping the template body vertices conditioned on $\beta$ and $\theta$, then articulating the bones according to the joint rotations $\theta$ via forward kinematics, and finally deforming the surface with linear blend skinning. The 3D keypoints $X(\theta,\beta) \in R^{3P}$, with P (e.g., P=24) the number of 3D joints in the skeleton, are obtained by linear regression from the final mesh vertices.

The techniques presented herein can be used by operating (in particular in the downstream AI application) on digital (and/or analog) image data which may be obtained by receiving sensor signals, e.g. video, RGB camera, radar, LiDAR, ultrasonic, motion, and/or thermal images for computer control of a machine, like a robot, a (e.g., automated) vehicle, a domestic appliance, a power tool, a manufacturing machine, a personal assistant, an access control system, a system for conveying information, like a surveillance system, and/or a medical (imaging) system. The downstream AI does so by performing a body detection-related task, e.g., classifying the sensor data, detecting the presence of objects in the sensor data, and/or performing a semantic segmentation on the sensor data, e.g., regarding pedestrians.

The techniques described herein comprise an upstream part in the machine-learning (ML) and/or AI tool chain. The technique (and/or upstream generative model) for generating the synthetic image data need not directly, but can indirectly, improve a ML system (and/or downstream AI, also: downstream generative model) that can be used for the above applications. In particular the method 100 generates training data for the method 300 to generate test data to check whether the trained ML system can then be safely operated.

The techniques described herein can be used for data augmentation as well as domain transfer tasks, e.g., from synthetic images to photorealistic images. The generated samples can be used for evaluation and/or training of any data-driven method, e.g., a pedestrian detection model (in particular as the body detect-related task).

According to an exemplary embodiment, a conditional image synthesis model, based on SD [8] and Control Net [11], is trained that can generate synthetic image data of people (and/or animals) with control over their 3D body pose. Additionally, control over the image content (e.g. location, appearance of the person, and/or weather) is provided through the textual prompt. Subsequently, the conditional image synthesis model is used to generate images for systematic evaluation of 3D human body pose estimators. This is possible precisely because the techniques described herein have control over the 3D body pose with the (e.g., conditional image synthesis) model.

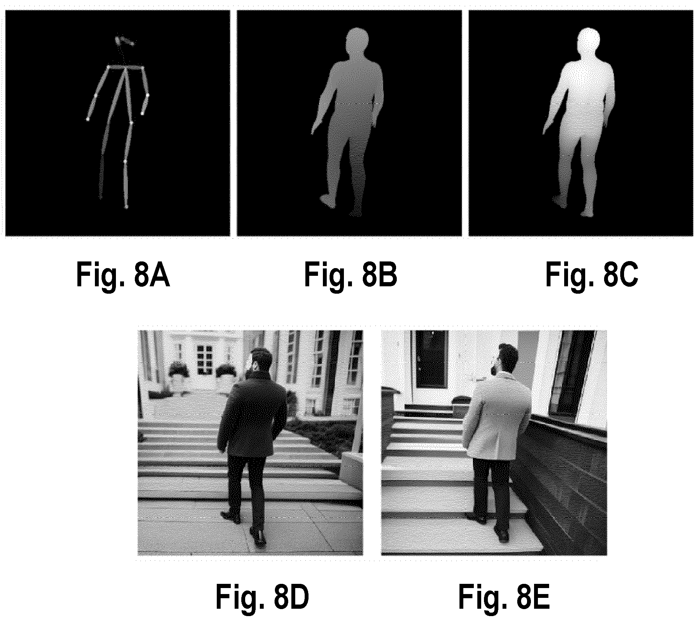

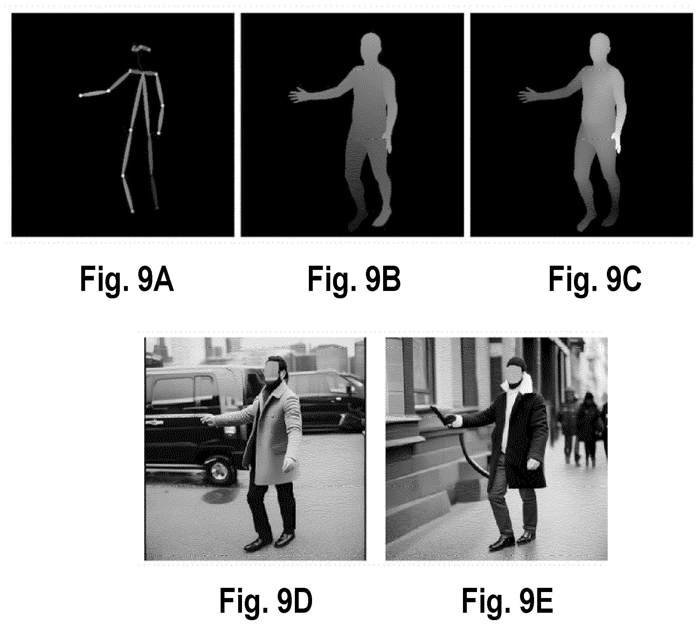

Figs. 8A to 8E and 9A to 9E show examples of the combined visual information (also: pose conditions) as conditions, namely the 2D skeleton representation (also denoted as 2D keypoints, Figs. 8A and 9A), the 2D projected (in particular dense) semantic encoding (Figs. 8B and 9B) and the 2D depth map (Fig. 8C and 9C)-

The generated synthetic image data in Figs. 8D and 8E use as textual prompt "a man on stairs wearing a coat". The generated synthetic image data in Figs. 9D and 9E use as textual prompt "a man in a city wearing a coat".

The exemplary conditional image synthesis model builds upon ControlNet with explicit 3D conditioning that captures the 3D structure of the human body and its semantics.

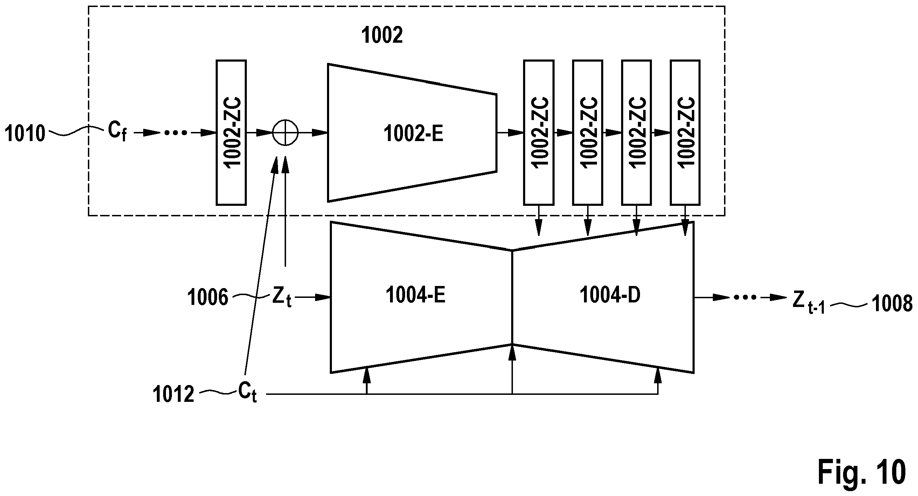

Fig. 10 schematically illustrates the combination of a SD encoder 1004-E, the corresponding SD decoder 1004-D and the ControlNet 1002 having a trainable copy 1002-E of the (in particular frozen after an initial training) SD encoder 1004-E. The ControlNet architecture 1002 controls the SD model (which comprises the SD encoder 1004-E and the SD decoder 1004-D).

The ControlNet 1002 comprises several zero-convolution layers 1002-ZC. In Fig. 10, as an illustrative example one zero-convolution layer 1002-ZC before the trainable encoder 1002-E and several zero-convolution layers 1002-ZC after the trainable encoder 1002-E are shown. Any other arrangement of the zero-convolution layers 1002-ZC (e.g., with more or less zero-convolution layers 1002-ZC before and/or after the trainable encoder 1002-E) may be possible.

The visual information (also denoted as visual image conditions) at reference sign 1010 are collectively denoted as $c_f = \{c_d, c_{dp}, c_k\}$ and input into the ControlNet (e.g., concatenated along a channel dimension). The visual information (and/or condition) comprises of three parts: the depth map $c_d$ of the (e.g., human) body, the (in particular dense) semantic encoding $c_{dp}$ of the (e.g., human) body, and the 2D skeleton representation (briefly: skeleton) $c_k$. The depth map provides the 3D pose information.

The (e.g., concatenated) visual information $c_f$ at reference sign 1010 may be transformed by multiple layers (not explicitly shown in Fig. 10) before the first zero convolution 1002-ZC is used.

The textual prompt $c_t$ relating to the appearance of the (e.g., human) body and/or the environmental information at reference sign 1012 is fed into the SD encoder 1004-E and the SD decoder 1004-D, e.g., by means of a cross-attention mechanism.

The textual prompt $c_t$ at reference sign 1012 is in the illustrative example of Fig. 10 additionally fed into the ControlNet 1002

Additionally, a first latent image $z_t$ (also denoted as corrupted image at time step $t$, and/or as noisy latent embedding of the corrupted image at time step t) at reference sign 1006 is used to initialize the SD, with the image $z_{t-1}$ (also denoted as corrupted image at time step t - 1) at reference sign 1008 provided as (e.g., indirect and/or derived) output. The (e.g., direct) output of the SD decoder 1004-D may comprise the prediction of the noise that was added to the latent image $z_t$, based on which the image $z_{t-1}$ may be determined (e.g., computed).

In an exemplary embodiment, the visual information is generated by rendering the posed SMPL mesh. Given a human pose $\theta$ that comprises an axis-angle representation of the joint rotations, a parametric body model M is used to infer the 3D mesh of the human body. Rendering the depth of the mesh provides a representation $c_d$. The (in particular dense) semantic encoding is created by assigning each vertex of the mesh its 3D position in T-pose as the color. This provides semantic information about the different body parts and allows the Control Net to distinguish, e.g., between left and right, front and back. Finally, the 2D keypoints allow to use datasets that only provide 2D keypoint annotations. This increases the overall diversity of the generated synthetic image data (in particular as training data for a downstream AI.

For training the conditional image synthesis model, a mix of datasets may be used. Datasets with accurate 3D pose annotation provide the image data and 3D pose pairs required for accurate generation. However, the datasets with accurate 3D pose annotation conventionally lack in diversity of environments and (e.g., human body or animal body) appearances. Therefore, the collection of training datasets may be supplemented with datasets that only provide 2D keypoints annotations. Using (e.g., human) mesh recovery methods, a pseudo 3D label for the 2D datasets can be determined (e.g., computed), and the alignment with the 2D keypoints can be sued as quality control metric to prune the data.

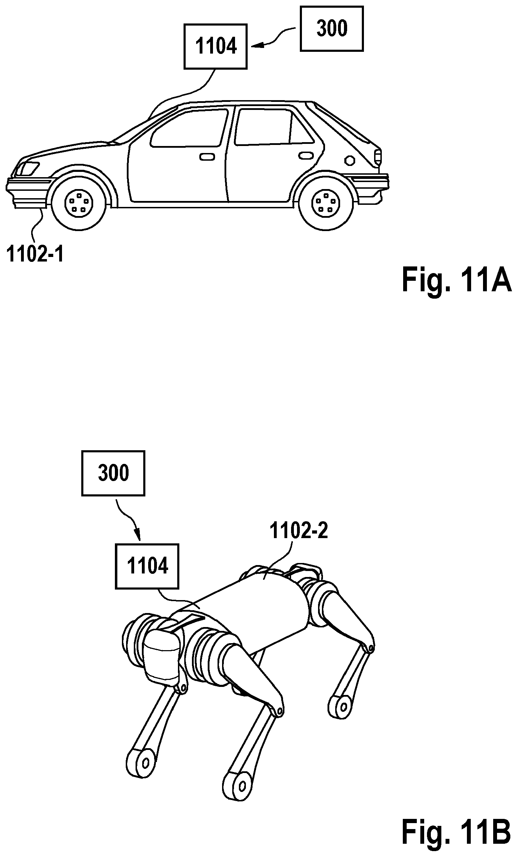

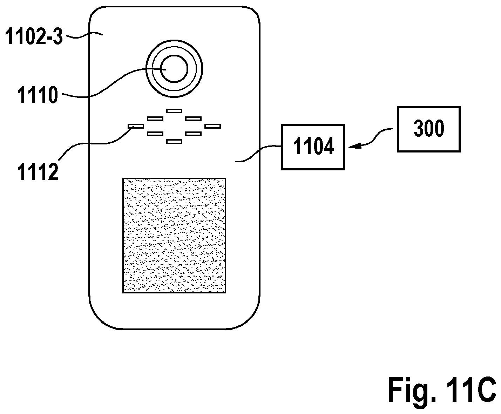

Figs. 11A, 11B and 11C show exemplary downstream applications to an automated (e.g., autonomous) driving vehicle 1102-1, a (in particular autonomous) robot 1102-2 and an access control system 1102-3. Each of the downstream applications comprises a controller 1104, on which the corresponding downstream AI is installed, and according to the method 300 trained, validated and/or tested. Fig. 11 C further exemplarily shows two types of sensors usable for access control, namely a video camera 1110 and microphone 1112.

For the evaluation of the 3D pose estimators, poses can be sourced from a common 3D pose estimation benchmark, for example 3DPW [10], which is incorporated herein by reference. Performance on the generated synthetic image data might decrease due to distribution shift of pixel value distribution. Therefore, for systematic evaluation, a synthetic replica of the 3d pose estimation benchmark is created. The goal is to create a synthetic clone, comprising images that are as close as possible to the original images regarding the image content. A Visual-Question-Answering (VQA) model may be used to extract the content of the images represented as text. The extracted content may be used to generate the images and/or synthetic replica. All experiments regarding the robustness are conducted using this replica as a baseline to eliminate distribution shift as a factor.

An exemplary general setup for an experiment regarding the robustness of the pose estimators to a certain attribute (e.g., regarding the appearance of the body and/or the environmental information) or set of attributes can take the following form: The textual prompts that was used for generation of the replica may be used (e.g., again) and the chosen attribute or set of attributes may be introduced. Then new synthetic image data is generated starting from the same noise that was used for the generation of the base image. In this way, the general structure and/or content is preserved and only intended attributes are introduced to the synthetic image data, which allows for a more meaningful comparison. Additionally, a technique like prompt-to-prompt [2] may be used to preserve the structure even more.

For evaluation, clothing, location, lighting, weather, age, ethnicity, and/or gender may be targeted as attributes. Especially, (e.g., real) image data with controlled lighting, weather, location, and clothing attribute are conventionally hard to obtain due to their large variability in the real world. It is also important to consider combinations of attributes for the evaluation.

Each attribute might occur a sufficient number of times in the training data. However certain combinations of attributes might never appear in the (in particular real) training data and thus lead to a drop in performance. Testing all combinations of attributes exhaustively is not feasible due to the exponential growth of the resulting set. To this end, combinatorial testing [7] may be applied to select a subset of all attribute configurations. A common 3D human pose metrics, such as mean per joint position error (mpjpe), procrustes aligned mean per joint position error (pa-mpjpe) and/or percentage of correct keypoints (pck) [4, 9, 6] may be used at different distance thresholds. Alternatively, or in addition, in order to measure the quality of the synthetic image data, Frechet inception distance (FID) [3] and/or image similarity metrics such as LPIPS [12] may be used.

The techniques presented herein can be used for conditional image synthesis, e.g. with Diffusion Models. Specifically, use can be made of data synthesis for data augmentation and validation purposes of DL models, such as 2D/3D pose estimators, and/or pedestrian detectors. The use of conditional image synthesis is particularly beneficial (and/or highly likely) when collecting additional (e.g., real) data is expensive and/or legally not possible due to privacy-preserving reasons.

Cited Prior Art

[1] Michael J. Black, Priyanka Patel, Joachim Tesch, and Jinlong Yang. BEDLAM: A synthetic dataset of bodies exhibiting detailed lifelike animated motion. In Proceedings IEEE/CVF Conf. on Computer Vision and Pattern Recognition (CVPR), pages 8726-8737, June 2023.

[2] Amir Hertz, Ron Mokady, Jay Tenenbaum, Kfir Aberman, Yael Pritch, and Daniel Cohen-Or. Prompt-to-prompt image editing with cross attention control. 2022.

[3] Martin Heusel, Hubert Ramsauer, Thomas Unterthiner, Bernhard Nessler, Günter Klambauer, and Sepp Hochreiter. Gans trained by a two time-scale update rule converge to a nash equilibrium. CoRR, abs/1706.08500, 2017.

[4] Angjoo Kanazawa, Michael J. Black, David W. Jacobs, and Jitendra Malik. End-to-end recovery of human shape and pose. CoRR, abs/1712.06584, 2017.

[5] Matthew Loper, Naureen Mahmood, Javier Romero, Gerard Pons-Moll, and Michael J. Black. SMPL: A skinned multi-person linear model. ACM Trans. Graphics (Proc. SIGGRAPH Asia), 34(6):248:1-248:16, October 2015.

[5a] Silvia Zuffi, Angjoo Kanazawa, David W. Jacobs and Michael J. Black. 3D Menagerie: Modeling the 3D shape and pose of animals. CoRR, abs/1611.07700, 2016

[6] Dushyant Mehta, Helge Rhodin, Dan Casas, Oleksandr Sotnychenko, Weipeng Xu, and Christian Theobalt. Monocular 3d human pose estimation using transfer learning and improved CNN supervision. CoRR, abs/1611.09813, 2016.

[7] Changhai Nie and Hareton Leung. A survey of combinatorial testing. ACM Comput. Surv., 43(2), feb 2011.

[8] Robin Rombach, Andreas Blattmann, Dominik Lorenz, Patrick Esser, and Björn Ommer. High-resolution image synthesis with latent diffusion models, 2021.

[9] Alexander Toshev and Christian Szegedy. Deeppose: Human pose estimation via deep neural networks. CoRR, abs/1312.4659, 2013.

[10] Timo von Marcard, Roberto Henschel, Michael Black, Bodo Rosenhahn, and Gerard Pons-Moll. Recovering accurate 3d human pose in the wild using imus and a moving camera. In European Conference on Computer Vision (ECCV), sep 2018.

[11] Lvmin Zhang and Maneesh Agrawala. Adding conditional control to text-to-image diffusion models, 2023.

[12] Richard Zhang, Phillip Isola, Alexei A Efros, Eli Shechtman, and Oliver Wang. The unreasonable effectiveness of deep features as a perceptual metric. In CVPR, 2018.

[13] Chitwan Saharia, William Chan, Saurabh Saxena, Lala Li, Jay Whang, Emily Denton, Seyed Kamyar Seyed Ghasemipour, Burcu Karagol Ayan, S. Sara Mahdavi, Rapha Gontijo Lopes, Tim Salimans, Jonathan Ho, David J Fleet and Mohammad Norouzi. Photorealistic Text-to-Image Diffusion Models with Deep Language Understanding. arXiv: 2205.11487 [cs.CV], 2022.

[14] Aditya Ramesh, Prafulla Dhariwal, Alex Nichol, Casey Chu and Mark Chen. Hierarchical Text-Conditional Image Generation with CLIP Latents. arXiv: 2204.06125 [cs.CV], 2022.

**Claims**

1. Computer-implemented method (100) for generating synthetic image data, which are usable for training, validating, and/or testing a downstream AI, in particular a downstream neural network, NN, for a body detection-related task based on sensor data, comprising the method steps of:

- Receiving (S102) visual information in relation to a body, wherein the visual information comprises a two-dimensional, 2D, skeleton representation of the body, a 2D projected, in particular dense, semantic encoding of the body, and a 2D depth map of the body;

- Receiving (S104) a textual prompt relating to at least one of an appearance of the body and/or environmental information relative to the body; and

- Generating (S106) synthetic image data of the body based on the received (S104) textual prompt conditioned by the received (S102) visual information, wherein the generating (S106) is performed by a conditional image synthesis model.

2. Method (100) according to claim 1, further comprising the step of:

- Determining (S101) the visual information in relation to the body, which comprises the 2D skeleton representation of the body, the 2D projected, in particular dense, semantic encoding of the body, and the 2D depth map of the body, by means of a generative body model, wherein determining (S101) the visual information comprises performing projections of the generated body model onto an image plane.

3. Method (100) according to the directly preceding claims, wherein the generative body model generates a model of the body based on a set of shape parameters and pose parameters; optionally
wherein the generative body model comprises a skinned multi-person linear, SMPL, model.

4. Method (100) according to any one of the preceding claims, further comprising the step of:

- Providing (S108) the generated (S106) synthetic image data of the body to the downstream AI, in particular the downstream NN, wherein the downstream AI, in particular the downstream NN, is configured for a body detection-related task on sensor data, and wherein providing (S108) the generated (S106) synthetic image data comprises providing the visual information, the set of shape parameters and pose parameters of the generated body model, the generated body model based on which the visual information is determined, and/or one or more related quantities as ground truth for the body detection-related task.

5. Method (100) according to any one of the preceding claims, wherein the conditional image synthesis model comprises a generative text-to-image model, which is configured for generating (S106) the synthetic image data based on the received (S104) textual prompt, and an image-conditioning model, which is configured for encoding the received (S102) visual information for conditioning, and/or controlling, the generative text-to-image model; optionally wherein the image-conditioning model is configured for encoding the received (S102) visual information in combination with the received (S104) textual prompt.

6. Method (100) according to claim 5, wherein the generative text-to-image model comprises a diffusion model, particularly a stable diffusion, SD, network, wherein the SD network comprises a U-Net architecture with an encoder and a, in particular skip-connected, decoder.

7. Method (100) according to claim 5 or 6, wherein the image-conditioning model comprises a ControlNet, wherein the ControlNet comprises an encoder and convolution layers with a cross-attention mechanism to the generative text-to-image model, in particular to the encoder of the SD network.

8. Computer-implemented method (200) of training a conditional image synthesis model for generating synthetic image data, which are usable for training, validating, and/or testing a downstream AI, in particular a downstream neural network, NN, for a body detection-related task based on sensor data, comprising the method steps of:

- Receiving (S202) a synthetic image training dataset, wherein the synthetic image training dataset comprises at least one of:
- a, in particular 2D, image data set of a body, which is annotated by means of a set of 3D body markers applied exogenously to the body at the time of acquiring the image data set;
- a, in particular 2D, image data set of a body, which is annotated by a human expert, wherein the annotation comprises 3D body pose information; and
- a, in particular 2D, image data set of a body, which is annotated by 2D keypoint information, and wherein the training of the conditional image synthesis model further comprises generating a 3D pose information; and

- Training (S204) a conditional image synthesis model based on the received (S202) synthetic image training dataset, wherein training (S204) the conditional image synthesis model comprises transforming the annotation of the synthetic image training dataset into at least a part of visual information in relation to a body, wherein the visual information comprises a two-dimensional, 2D, skeleton representation of the body, a 2D projected, in particular dense, semantic encoding of the body, and a 2D depth map of the body, and wherein the, in particular 2D, image data set is taken into account as ground truth for the generated synthetic image data.

9. Computer-implemented method (300) of training, validating, and/or testing a downstream AI, in particular a downstream neural network, NN. for performing a body detection-related task based on sensor data, comprising the method steps of:

- Receiving (S302) synthetic image data of a body, wherein the synthetic image data of the body are generated according to any one of the method claims 1 to 7, wherein the synthetic image data of the body comprises a generated body model, visual information in relation to a body, and/or a related quantity, wherein the visual information comprises a two-dimensional, 2D, skeleton representation of the body, a 2D projected, in particular dense, semantic encoding of the body, and a 2D depth map of the body, and/or wherein the related quantity comprises information on the body derived from the generated body model and/or from the visual information; and
- Training (S304) the downstream AI, in particular the downstream NN, based on the received (S302) synthetic image data of the body, wherein the generated body model, the visual information in relation to a body, and/or the related quantity is considered as ground truth.

10. Method (300) according to the directly preceding claim, wherein performing the body detection-related task is based on received sensor data, wherein the task comprises at least one of a classification, a semantic segmentation, and a detection of an object, in particular a detection of a body.

11. Method (300) according to claim 9 or 10, wherein the sensor data are received from at least one of a video camera, a radar sensor, a LiDAR sensor, an ultrasonic sensor, a motion sensor, and a thermal image sensor.

12. Use of the method (300) according to any one of claims 9 to 11 for applying the downstream artificial intelligence, in particular the downstream neural network to at least one of:

- Automated driving;
- Planning a movement of a robot;
- Operating a domestic appliance; and
- Controlling an access control system.

13. Computing device (400) for generating synthetic image data, which are usable for training, validating, and/or testing a downstream AI, in particular a downstream neural network, NN, for a body detection-related task based on sensor data, the computing device (400) comprising:

- a first input interface (402) configured for receiving visual information in relation to a body, wherein the visual information comprises a two-dimensional, 2D, skeleton representation of the body, a 2D projected, in particular dense, semantic encoding of the body, and a 2D depth map of the body;
- a second input interface (404) configured for receiving a textual prompt relating to at least one of an appearance of the body and/or environmental information relative to the body; and
- a generating module (406) comprising a conditional image synthesis model, wherein the conditional image synthesis model is configured for generating synthetic image data of the body based on the received textual prompt conditioned by the received visual information.

14. Computing device (500) for training a conditional image synthesis model for generating synthetic image data, which are usable for training, validating, and/or testing a downstream AI, in particular a downstream neural network, NN, for a body detection-related task based on sensor data, the computing device (500) comprising:

- an input interface (502) configured receiving a synthetic image training dataset, wherein the synthetic image training dataset comprises at least one of:
- a, in particular 2D, image data set of a body, which is annotated by means of a set of 3D body markers applied exogenously to the body at the time of acquiring the image data set;
- a, in particular 2D, image data set of a body, which is annotated by a human expert, wherein the annotation comprises 3D body pose information; and
- a, in particular 2D, image data set of a body, which is annotated by 2D keypoint information, and wherein the training of the conditional image synthesis model further comprises generating a 3D pose information; and
- a training module (504) configured for training a conditional image synthesis model based on the received synthetic image training dataset, wherein training the conditional image synthesis model comprises transforming the annotation of the synthetic image training dataset into at least a part of visual information in relation to a body, wherein the visual information comprises a two-dimensional, 2D, skeleton representation of the body, a 2D projected, in particular dense, semantic encoding of the body, and a 2D depth map of the body, and wherein the, in particular 2D, image data set is taken into account as ground truth for the generated synthetic image data.

15. Computing device (600) for training, validating, and/or testing a downstream AI, in particular a downstream neural network, NN, for performing a body detection-related task based on sensor data, the computing device (600) comprising:

- An input interface (602) configured for receiving synthetic image data of a body, wherein the synthetic image data of the body are generated according to any one of the method claims 1 to 7, wherein the synthetic image data of the body comprises a generated body model, visual information in relation to a body, and/or a related quantity, wherein the visual information comprises a two-dimensional, 2D, skeleton representation of the body, a 2D projected, in particular dense, semantic encoding of the body, and a 2D depth map of the body, and/or wherein the related quantity comprises information on the body derived from the generated body model and/or from the visual information; and
- A training module (604) configured for training the downstream AI, in particular the downstream NN, based on the received synthetic image data of the body, wherein the generated body model, the visual information in relation to a body, and/or the related quantity is considered as ground truth.

<u>100</u>

```
┌ ─ ─ ─ ┐
  S101
└ ─ ─ ─ ┘
    │
    ▼
┌───────┐
│ S102  │
└───────┘
    │
    ▼
┌───────┐
│ S104  │
└───────┘
    │
    ▼
┌───────┐
│ S106  │
└───────┘
    │
    ▼
┌ ─ ─ ─ ┐
  S108
└ ─ ─ ─ ┘
```

**Fig. 1**

<u>200</u>

```
┌───────┐
│ S202  │
└───────┘
    │
    ▼
┌───────┐
│ S204  │
└───────┘
```

**Fig. 2**

<u>300</u>

```
┌───────┐
│ S302  │
└───────┘
    │
    ▼
┌───────┐
│ S304  │
└───────┘
```

**Fig. 3**

**400**

410

402  404  408

412

401  406  414

**Fig. 4**

**500**

506

502

508

504

510

**Fig. 5**

**600**

606

602

608

604

610

**Fig. 6**

Fig. 7A          Fig. 7B

Fig. 7C                    Fig. 7D

Fig. 8A

Fig. 8B

Fig. 8C

Fig. 8D

Fig. 8E

Fig. 9A

Fig. 9B

Fig. 9C

Fig. 9D

Fig. 9E

Fig. 10

1104    300

1102-1

**Fig. 11A**

300

1104    1102-2

**Fig. 11B**

Fig. 11C

Europäisches
Patentamt
European
Patent Office
Office européen
des brevets

## EUROPEAN SEARCH REPORT

**Application Number**

EP 24 15 7952

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHENZHEN WENG ET AL: "Diffusion-HPC: Generating Synthetic Images with Realistic Humans", ARXIV.ORG, CORNELL UNIVERSITY LIBRARY, 201 OLIN LIBRARY CORNELL UNIVERSITY ITHACA, NY 14853, 16 March 2023 (2023-03-16), XP091460403, * Abstract, 2. Related Work, 3. Diffusion-HPC; figures 1,2 * | 1-15 | INV. G06V10/774 G06V10/82 G06V40/10 G06V10/34 |
| X | CAN QIN ET AL: "UniControl: A Unified Diffusion Model for Controllable Visual Generation In the Wild", ARXIV.ORG, CORNELL UNIVERSITY LIBRARY, 201 OLIN LIBRARY CORNELL UNIVERSITY ITHACA, NY 14853, 2 November 2023 (2023-11-02), XP091650691, * Abstract, 3. UniControl, 4. Experiments; figures 1-2 * | 1-8,13, 14 | |

- - - - -

- - - - -

**TECHNICAL FIELDS SEARCHED (IPC)**

G06V

The present search report has been drawn up for all claims

| Place of search | Date of completion of the search | Examiner |
|---|---|---|
| The Hague | 13 June 2024 | Markaki, Vasiliki |

EPO FORM 1503 03.82 (P04C01)

2

**REFERENCES CITED IN THE DESCRIPTION**

**Non-patent literature cited in the description**

- **M. LOPER et al.** SMPL: A skinned multi-person linear model. *ACM Trans. Graphics (Proc. SIGGRAPH Asia)*, October 2015, vol. 34 (6), 248-1, 248-16
- **M. LOPER et al.** SMPL: A Skinned Multi-Person Linear Model. *ACM Trans. Graphics (Proc. SIGGRAPH Asia)*, October 2015, vol. 34 (6), 248-1, 248-16
- **S. ZUFFI et al.** *3D Menagerie: Modeling the 3D Shape and Pose of Animals*, http://arxiv.org/abs/1611.07700
- **A. RAMESH et al.** Hierarchical Text-Conditional Image Generation with CLIP Latents. *arXiv: 2204.06125*
- **L. ZHANG et al.** Adding Conditional Control to Text-to-Image Diffusion Models. *Computer Vision Foundation and IEEE Xplore*, 2023
- **MICHAEL J. BLACK** ; **PRIYANKA PATEL** ; **JOACHIM TESCH** ; **JINLONG YANG**. BEDLAM: A synthetic dataset of bodies exhibiting detailed lifelike animated motion. *Proceedings IEEE/CVF Conf. on Computer Vision and Pattern Recognition (CVPR)*, June 2023, 8726-8737
- **AMIR HERTZ** ; **RON MOKADY** ; **JAY TENENBAUM** ; **KFIR ABERMAN** ; **YAEL PRITCH** ; **DANIEL COHEN-OR**. *Prompt-to-prompt image editing with cross attention control*, 2022
- **MARTIN HEUSEL** ; **HUBERT RAMSAUER** ; **THOMAS UNTERTHINER** ; **BERNHARD NESSLER** ; **GÜNTER KLAMBAUER** ; **SEPP HOCHREITER**. Gans trained by a two time-scale update rule converge to a nash equilibrium. *CoRR*, 2017
- **ANGJOO KANAZAWA** ; **MICHAEL J. BLACK** ; **DAVID W. JACOBS** ; **JITENDRA MALIK**. End-to-end recovery of human shape and pose. *CoRR*, 2017
- **MATTHEW LOPER** ; **NAUREEN MAHMOOD** ; **JAVIER ROMERO** ; **GERARD PONS-MOLL** ; **MICHAEL J. BLACK**. SMPL: A skinned multi-person linear model. *ACM Trans. Graphics (Proc. SIGGRAPH Asia)*, October 2015, vol. 34 (6), 248-1, 248-16

- **SILVIA ZUFFI** ; **ANGJOO KANAZAWA** ; **DAVID W. JACOBS** ; **MICHAEL J. BLACK**. 3D Menagerie: Modeling the 3D shape and pose of animals. *CoRR*, 2016
- **DUSHYANT MEHTA** ; **HELGE RHODIN** ; **DAN CASAS** ; **OLEKSANDR SOTNYCHENKO** ; **WEIPENG XU** ; **CHRISTIAN THEOBALT**. Monocular 3d human pose estimation using transfer learning and improved CNN supervision. *CoRR*, 2016
- **CHANGHAI NIE** ; **HARETON LEUNG**. A survey of combinatorial testing. *ACM Comput. Surv.*, February 2011, vol. 43 (2)
- **ROBIN ROMBACH** ; **ANDREAS BLATTMANN** ; **DOMINIK LORENZ** ; **PATRICK ESSER** ; **BJÖRN OMMER**. *High-resolution image synthesis with latent diffusion models*, 2021
- **ALEXANDER TOSHEV** ; **CHRISTIAN SZEGEDY**. Deeppose: Human pose estimation via deep neural networks. *CoRR*, 2013
- **TIMO VON MARCARD** ; **ROBERTO HENSCHEL** ; **MICHAEL BLACK** ; **BODO ROSENHAHN** ; **GERARD PONS-MOLL**. Recovering accurate 3d human pose in the wild using imus and a moving camera. *European Conference on Computer Vision (ECCV)*, September 2018
- **LVMIN ZHANG** ; **MANEESH AGRAWALA**. *Adding conditional control to text-to-image diffusion models*, 2023
- **RICHARD ZHANG** ; **PHILLIP ISOLA** ; **ALEXEI A EFROS** ; **ELI SHECHTMAN** ; **OLIVER WANG**. The unreasonable effectiveness of deep features as a perceptual metric. *CVPR*, 2018
- **CHITWAN SAHARIA** ; **WILLIAM CHAN** ; **SAURABH SAXENA** ; **LALA LI** ; **JAY WHANG** ; **EMILY DENTON** ; **SEYED KAMYAR SEYED GHASEMIPOUR** ; **BURCU KARAGOL AYAN** ; **S. SARA MAHDAVI** ; **RAPHA GONTIJO LOPES**. Photorealistic Text-to-Image Diffusion Models with Deep Language Understanding. *arXiv: 2205.11487*, 2022
- **ADITYA RAMESH** ; **PRAFULLA DHARIWAL** ; **ALEX NICHOL** ; **CASEY CHU** ; **MARK CHEN**. Hierarchical Text-Conditional Image Generation with CLIP Latents. *arXiv: 2204.06125*, 2022